# EUROPEAN PATENT APPLICATION

(11) **EP 4 614 046 A2**
(43) Date of publication of application: **10.09.2025**
(21) Application number: 25159032.9
(22) Date of filing: 20.02.2025
(51) Int. Cl.: F16L 19/02, F16L 19/065

(54) **MECHANICAL FITTING AND METHOD OF ASSEMBLICH SUCH**

(30) Priority: 05.03.2024 FR 2402205
(71) Applicant: Aliaxis Research & Technology, 78990 Élancourt (FR)
(72) Inventor: Adelmand, Hemin, 78990 Élancourt (FR)
(74) Representative: Sonnenberg Harrison Partners

(57) **Abstract**

The present invention proposes a mechanical fitting for connecting pipes or for attaching a pipe, a method of assembling such a fitting and a pipe, and a tool for the assembly of a fitting and a pipe. The mechanical fitting comprises a main body (10, 210) extending axially from an open end (11) and defining an insertion space for a pipe, a clip ring (30, 130, 230) designed to close over a pipe, and a nut (40, 240) movably mounted at least in part into the main body for tightening the clip ring. The clip ring (30; 130) is arranged inside the main body for being contactable by the nut (40; 240) and has an inner circumferential boss or protrusion (32; 132), to be clipped into a corresponding outer circumferential groove (4) of the pipe (2).

## Description

The present invention claims priority to the French patent application 24/02205 filed on 05 March 2024. The entire disclosure of French patent application 24/02205 is hereby incorporated by reference.

### TECHNICAL FIELD

The present invention relates to a mechanical fitting for connecting a pipe, and method of assembling such a mechanical fitting and a pipe, and a tool usable in such a method.

### PRIOR ART

Press fittings are used to connect not only metal but also plastic or composite metal-plastic pipes. They are used to connect appropriately arranged sections of pipe, with their connecting pieces being inserted into the ends of the pipes to be connected, where they are then deformed or crimped or pressed. They are fastened in certain zones, e.g. using press sleeves on the pieces by using so-called system compression tools that usually have interchangeable pressing jaws.

The pipe, tubes, or conduit systems are assembled in several steps: first the pipes are inserted into a fitting, and then the fitting is crimped to guarantee good mechanical strength and a leaktight installation. The compression is essentially a pressure on the fitting sleeve - also referred to as a press sleeve - which causes the deformation or shaping of the fitting to the pipe which is inserted into it. The pressure is usually applied to the fitting using a press jaw acting as a compression tool. These press jaws apply radial pressure to the fitting material in order to bring an interaction with the surface of the pipe(s)/pipe(s) to be connected, thus achieving a reliable connection and a reliable seal.

Other fittings, such as used for example for hoses such as in garden appliances, use a threaded engagement to provide for the crimping of the pipe and rely on the fact that a part of the fitting engages with the pipe.

In both cases, the connection relies on a deformation of the pipe to be connected, in most cases using an insert inside of the tube to be connected.

For different pipe arrangements, press fittings can be designed as curved, angular or T-shaped pieces, with commonly one, two or three connection pieces being provided.

The pipe or pipe can be mono material and made of thermoplastic materials including but not limited to PE, PB, PEX, PERT, PER ... or Composite (multi material pipe structure) with different layers of functional materials (PEX, PERT, PVDF, Aluminium...).

It is known to use full plastic press fitting, or press fitting having a fitting body made of metal (brass, Stainless steel....), or thermoplastic (PVC, PPSU, PVDF, PPS), that can also be reinforced with fibre glass reinforcement.

With the introduction of pipes in c-PVC material, however, compression fittings relying on deformation of the material of the pipe for the connection do not show good results. Indeed, c-PVC exhibits different properties and is more brittle than other materials.

One solution that was proposed is a solvent cement connection. However, the regulation is evolving, and it will be necessary to avoid the addition of solvents.

Therefore, it is necessary to find another solution for compression fitting, to avoid the use of solvent.

One object of the present disclosure is to propose a mechanical fitting that allows the connection of PVC based materials, such as c-PVC, PVC, and PVC-U piping systems for hot and cold-water installations, in particular pressurized installations.

### SUMMARY OF THE INVENTION

These and other objects of the present invention are achieved by a mechanical fitting for connecting a pipe, comprising: a main body extending axially from an open end and defining an insertion space for a pipe, a clip ring designed to close over a pipe, and a nut movably mounted at least in part into the main body for tightening the clip ring. The clip ring is arranged inside the main body for being contactable by the nut and has an inner circumferential boss or protrusion, to be clipped into a corresponding outer circumferential groove of the pipe.

In an aspect, the boss has an insertion surface extending from a pipe insertion end to an inner radial boss surface followed by a pull-out surface, wherein the insertion surface forms an insertion angle with respect to the inner radial boss surface wider than a pull-out angle formed by the pull-out surface with respect to the to the inner boss surface. The geometry of the boss allows to redistribute the pullout force into axial and horizontal force, as well as facilitating insertion of the pipe in the clip ring.

The insertion surface and/or the pull-out surface may be provided with inner grooves. In an aspect, the clip ring has at least one support surface extending axially from the pull-out surface and/or from the insertion surface, forming at least one shoulders designed to lie against the pipe outer surface of the pipe when the pipe is inserted. This design allows diminishing the constraints or load on the pipe at the groove and transmit the constraints to the clip ring through the boss inserted in the groove.

The clip ring can be an open ring, wherein an inner diameter of the clip ring when open is larger than an outer diameter of the groove, preferably substantially corresponding to an outer diameter of pipe, and with an inner diameter of the clip ring when closed is equivalent to the outer diameter of the groove. This ensures that the clip ring closes and transmit the force on the pipe. In an aspect, the clip ring has an outer conical shape, with an outer conical surface, with the diameter decreasing from the pipe insertion end to the fitting side, and wherein the clip ring is housed in a clip receiving part of the main body, the clip receiving part having a corresponding conical shape. A conical shape facilitates both the pipe insertion, and the force transmission during closing of the clip ring when the nut is moved into the fitting.

In an aspect, the nut has a first nut portion to be mounted inside a nut receiving part of the main body and a nut head, with the first nut portion having nut threads to be threaded into internal threads of the nut receiving part, and a nut head part extending from the first nut portion, the head part being provided to abut against the open end of the main body.

A joint can be provided inside a joint housing portion in the main body located adjacent the clip receiving part.

A at least one of these features is fulfilled: the nut is made of fibre reinforced polymer, polymer matrix, or composite, the main body is made of fibre reinforced polymer, polymer matrix, or composite, the ring is made of polymer, fibre reinforced polymer, polymer matrix, or composite.

The present invention further provides for a method of assembling of such a mechanical fitting and a pipe provided with an outer circumferential groove. The method comprises inserting the pipe into the fitting main body and the clip ring or inserting both the pipe with the clip ring mounted thereon into the fitting main body, preferably up to the inner radial rib, and moving the nut in the main body, by sliding and/or threading the nut in the main body to close the clip ring around the pipe. The method comprises inserting the boss of the clip ring into the groove of the pipe.

In an aspect, the groove is provided by a step of cutting the pipe to form the groove, preferably an outer circular groove on the pipe, preferably comprising the steps of forming simultaneously the outer circular circumferential groove on the pipe and chamfering the insertion end of the pipe and/or correcting the insertion end. A circular groove can be made prior to assembly, even if the pipe has some ovalisation. With other words, the groove is an ovalisation compensation tool. This is particularly advantageous when using PVC pipes which are brittle and which can not withstand deformation.

It should be noted that the closing of the nut is visual indication to good and tight connection. In addition, after tightening, the clip ring is fully closed and there is no space for accumulation of impurities, between the joint, the rubber, the pipe preventing the growth of micro-organism, bio-film and accumulation of impurities.

It should be noted the clip ring is designed to adapt with the ovalisation pipe. The dimension of clip-ring is equivalent to the dimension of the groove, which allows compensating ovalisation or pipe removal materials. Additionally, the clip ring has an angled outer surface that allows the reduction of the clip ring diameter upon insertion into the fitting or upon tightening of the nut. The clip ring fills the groove space in the pipe and support the pipe under radial load. The present invention further propose a tool usable in the above method, wherein the tool has a main hollow body to be mounted over the pipe, with a pipe stop to stop the pipe end, the tool having a groove cutter, at an axial distance from the pipe stop, wherein the axial distance between the pipe stop and the groove cutter can be adjusted to correspond to an axial distance between the pipe stop and the boss of the clip ring of the mechanical fitting.

In an aspect, the tool has at least one of a chamfering blade extending from the pipe stop for chamfering the pipe insertion end, and a corrective blade at the pipe stop for correcting the pipe end, a pair of arms, preferably opposite arms, extending outwardly from the main body.

### DESCRIPTION OF THE DRAWINGS

Other characteristics and advantages of the invention will be more clearly evident upon reading the description of several currently preferred embodiments, provided as examples only, with reference to the attached drawings, wherein:
[Figure 1] shows a mechanical fitting according to a first aspect of the present disclosure,
[Figure 2] shows the mechanical fitting of Fig. 1, in an exploded view,
[Figure 3] shows the mechanical fitting of Fig.1,
[Figure 4] shows the mechanical fitting of Fig.1 assembled with a pipe,
[Figure 5] shows a main body of the mechanical fitting according to present disclosure,
[Figure 6] shows a clip ring usable in a mechanical fitting according to an aspect of the present disclosure,
[Figure 7] shows a clip ring usable in a mechanical fitting according to an aspect of the present disclosure with a pipe,
[Figure 8] shows details of the clip ring of Fig. 7 according to an aspect of the present disclosure,
[Figure 9] shows a cut view of the clip ring of Fig. 7,
[Figure 10] shows a clip ring usable in a mechanical fitting according to another aspect of the present disclosure with a pipe,
[Figure 11] shows details of the clip ring of Fig. 10,
[Figure 12] shows of a tool according to present disclosure,
[Figure 13] shows of a tool according to another aspect of the present disclosure,
[Figure 14] shows of a tool according to another aspect of the present disclosure,
[Figure 15] shows a method of assembling a pipe with a mechanical fitting, according to an aspect of the present disclosure.

### DETAILED DESCRIPTION

The description below is made in reference to union fittings, but this is not limitative, and the following description applies to elbow, tee or reduction fittings which can be manufactured on the same teachings.

In the figures, identical parts are identified using the same reference numbers.

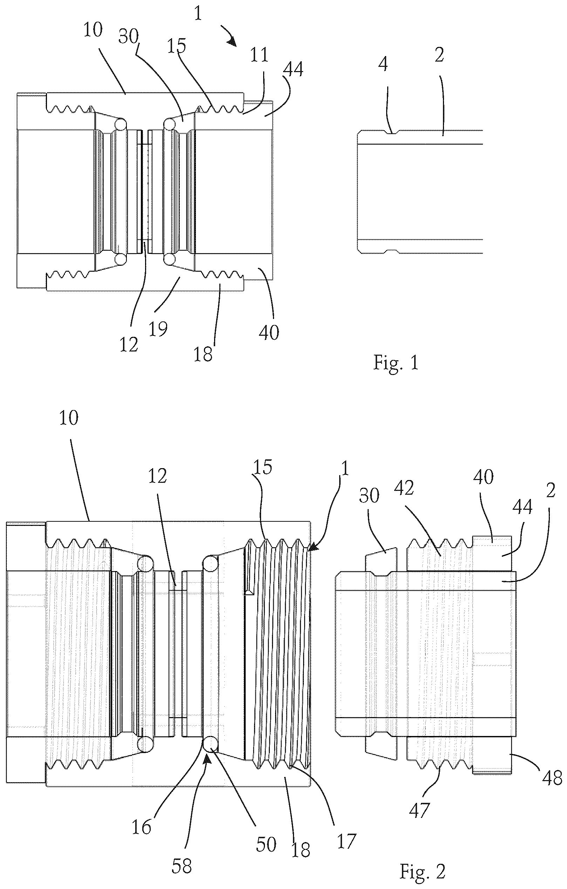

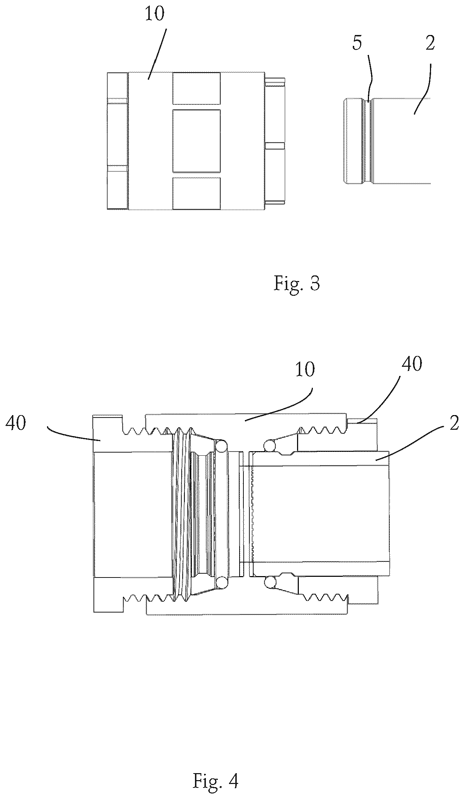

Figure 1 to figure 3 shows a mechanical fitting 1 allowing the connection of a pipe 2 according to one aspect of the present disclosure, and Figure 2 shows the mechanical fitting 1 with the pipe 2 after assembly.

The pipe 2 may be for example a pipe for/in a piping system for fluid installations inside or outside buildings. The pipe may be made of PVC based materials such as c-PVC, PVC, and PVC-U piping systems for hot and cold-water installations.

The fitting 1 may form one side of a connector having similar or another kind of fitting on its other end or side. The fitting may also be provided at a port of a fluidic device for connecting a pipe thereto.

The mechanical fitting 1 comprises a main body 10 for receiving the pipe. The main body 10 has an inner body surface 15 and defines a pipe insertion space extending in an axial direction, between an open end 11, where the pipe 2 is inserted, and an inner radial rib 12 extending radially internally from the inner body surface 15. The inner radial rib 12 is provided to stop the pipe inserted in the main body 10.

When the pipe is a multilayered pipe, a joint gasket can be provided at the inner radial rib to protect the multilayer pipe.

A nut 40 is provided to be moved into the main body 10 in an assembly position when the pipe is inserted into the main body, to fix and maintain the pipe in place.

As can be seen, the nut 40 is not provided into the entire main body 10 but only in a nut receiving part 18 of the main body 10 extending axially between the open end 11 and a clip receiving part 19. The clip receiving part 19 houses a clip ring 30 abutting against an O ring 50 in a joint housing 58 defined by an inner radial projection 16 on the inner body surface 15. During assembly, the nut 40 pushes the clip ring 30 to press the O ring 50 against the inner radial projection 16.

As can be seen on the figure, the inner radial projection 16 is axially spaced apart from the inner radial projection 12. With other words, not all of the pipe length inserted into the fitting 1 will be below the nut 40 and the pipe free end abutting against the inner radial projection 12 is not provided below the nut 40. This allows taking into account any variations during installation of the pipe, which either may not be fully inserted or which may have a cross section which is slightly inclined. Indeed, it may happen that during installation of a pipe system, the user cuts the pipe and that the cut is not perfectly straight. This free space between the inner radial projection 12 and the inner radial projection 16 ensures that all the pipe end is compressed, even if the pipe end is not straight.

The nut 40 has a first nut portion 42 to be threaded into the nut receiving part 18 of the main body 10. To do so, the nut receiving part 18 has internal threads 17 extending from the open end 11. The internal threads 17 are provided for threading the nut 40 into the main body 10 when the pipe is inserted and positioned within the main body 10. The nut 40 has therefore corresponding nut threads 47. However, threading is an example only, and the nut could slide into the main body.

The nut 40 has also a nut head part 44 extending axially between the first nut portion 42 and a nut free end 48. The head part 44 is provided to abut against the open end 11 of the main body.

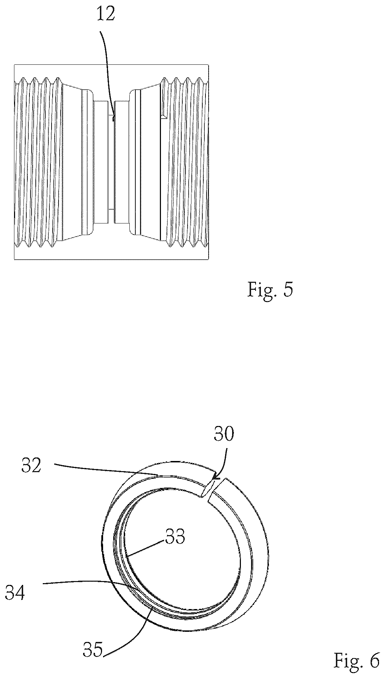

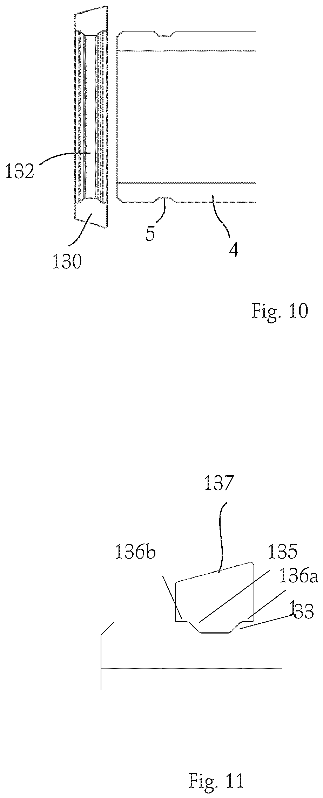

The clip ring 30 is illustrated on figures 6 to 9 in a first aspect, and another example of clip ring 130 is shown on figures 10 and 11 in another aspect.

The clip rings 30, 130 are designed to maintain the pipe against pullout force due to internal pressure or external load.

The clip rings 30, 130 have an inner circumferential boss or protrusion 32, 132, respectively, to be clipped into a corresponding groove 4 of the pipe 2.

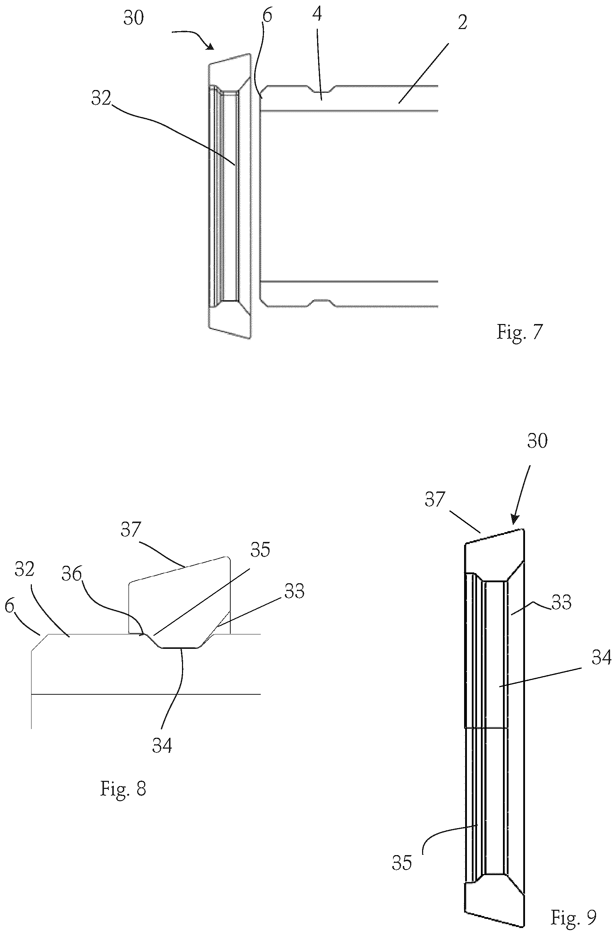

As can be seen on the figures, the boss 32 defines an insertion surface 33, 133 extending from a pipe insertion end to an inner radial boss surface 34, 134, followed by a pull-out surface 35, 135 on the pull-out side. The geometry of the clip ring differs in the first aspect shown in figures 7 to 9, and in the other aspect shown in figures 10 and 11.

In the first aspect shown on figures 7 to 9, the insertion surface 33 forms an insertion angle with respect to the inner boss surface 34 at an angle which is wider than a pull-out angle formed by the pull-out surface 35 with respect to the inner boss surface 34.

The dimensions of the groove and of the boss depend on the diameter and the operation pressure of pipe., as well as the thickness of the pipe and the material of pipe. For example, the groove may have a depth be in a range of 2 to 4%, preferably 2.5 to 4.0 % of the pipe diameter, and/or in a range of 10% to 30% of the pipe thickness.

Note that the groove could have other shapes such as circular, square, or rectangular shape.

Finally, the clip ring 30 has a support surface 36 extending axially from the pull-out surface 34, so that the support surface 36 defines a shoulder which lies against the pipe and allow reinforcing the pipe at the groove zone.

The clip ring 130 of Figures 10 and 11 differs from the clip ring 30 mainly in that the clip ring 130 has two support surfaces 136a, 136b. A first support surfaces 136a extending axially from the insertion surface 133 and a second support surfaces extending axially from the pull-out surface 134. With this geometry, the boss 132 is in-between two shoulders 136a, 136b designed to lie against the outer surface of the pipe 2 and allow reinforcing the pipe at the groove zone.

The clip ring 30, 130 is an open ring which allows redistributing the axial pullout load into axial and radial load on the body.

The inner diameter of the clip ring 30 when open is higher than the outer diameter of pipe, to facilitate the assembling and dissembling with the outer groove 4 of the pipe.

The clip ring 30 is provided to deform and close when the nut 40 is threaded in the main body 10. When closed, under load, the inner diameter of the clip ring 30 is reduced and becomes equivalent to the outer diameter of the groove 4.

It should be noted that, in addition to maintaining the pipe against pullout force, the clip ring 30 also provides a support to reinforce the groove zone under operating pressure. When the nut is fully closed and reaches to the body, this provides an indication of good assembling.

Finally, the clip ring has an outer conical shape, with an outer conical surface 37, 137, with the diameter decreasing from the pipe insertion end to the fitting side. The clip receiving part 19 has a corresponding conical shape, with a diameter decreasing from the threads 47 to the joint housing 58, designed to cooperate with the ring conical surface 37, 137.

The conical shape helps closing the fitting on the pipe. When the nut slides or is threaded on the nut receiving part 18, the clip ring 30 under load closes itself around the pipe.

To distribute the load homogeneously along the pipe and avoid local concentration of the load, the clip ring 30 may not be a full closed ring and can be an open ring instead. The clip ring 30 can be made as an open ring in one part as shown in figure 6 with an open channel, or it can be made of several part. The open ring allows a diameter reduction of the clip ring. Preferably, the clip ring is fully closed in the assembled fitting.

As mentioned above, the clip ring 30, 130 is designed to cooperate with a groove 4 on the pipe. The skilled person understands that the groove 4 needs to be made on the pipe 2 at a right position.

It should be understood that the groove can be made in the pipe, preferably on spot or just before assembly. The groove 4 is circular, even if the pipe has some ovalisation. With other words, the groove is an ovalisation compensation tool. This is particularly advantageous when using PVC pipes which are brittle and which can not withstand deformation. Instead of trying to reshape the PVC pipe to be circular again, the fitting of the present invention allows using a circular groove, made in the pipe on the spot.

Finally, the pipe 2 as seen on the figures is preferably chamfered for facilitating the insertion on the fitting 1.

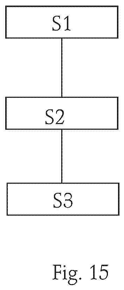

A method of assembling a fitting and a pipe is shown on figure 15.

First, the pipe is inserted the pipe into the fitting main body and the clip ring, preferably up to the inner radial rib 12, at step S1. The pipe pushes the clip ring against the joint, and when the clip ring can not move axially anymore, the pipe groove and the clip ring can engage each other.

It is possible to clip the clip ring on the pipe before insertion and then insert both the pipe with the clip ring in the fitting. In both cases, the boss of the clip ring is inserted into the groove of the pipe.

Then, the nut is moved inside the main body, by sliding and/or threading the nut in the main body to close the clip ring 30 around the pipe, at step S2, until the completion of the connection (step S3).

The groove is preferably made on site, and it is possible to form simultaneously the outer circular groove on the pipe and chamfering, and possibly correct, the pipe end to be inserted.

It is advantageous to make the groove and tube chamfering can bey done by the same tool.

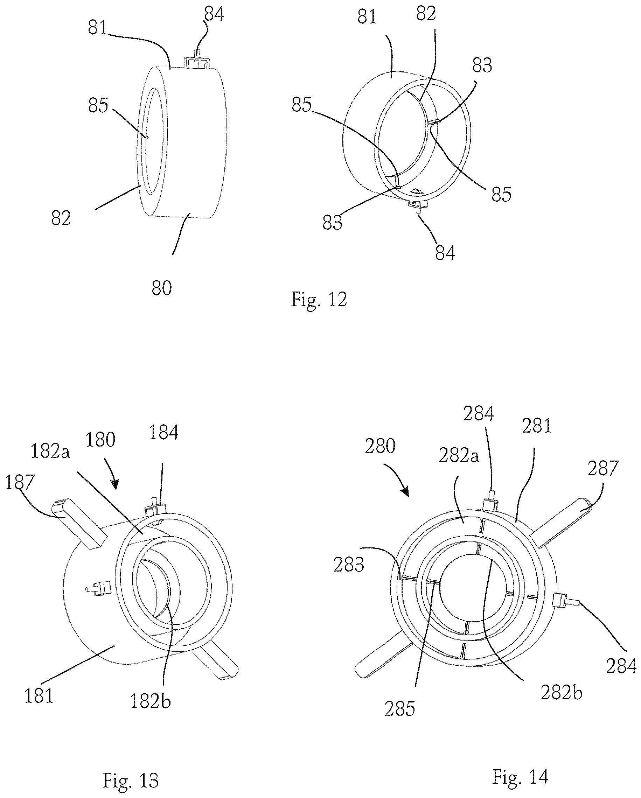

Figures 12 to 14 shows different examples of tools.

Figure 12 shows a tool 80 with a tool body 81 which can be mounted on the pipe end, the tool body extending axially between a pipe insertion end and a pipe stop 82 to stop the pipe end.

The pipe stop 82 provides a radial contact surface for the pipe end, and is designed to be in contact with the cross section of the pipe end. The pipe stop 82 is therefore perpendicular to the tool body 81.

The tool 80 is provided with chamfering blades 83 for chamfering the pipe end. The chamfering blades 83 extend axially from the pipe stop 82. The tool 80 has also a groove cutter 84, at an axial distance from the pipe stop 82. The axial distance between the pipe stop 82 and the groove cutter 84 corresponds to an axial distance between the pipe stop 12 and the boss of the clip ring 30, 130 of the mechanical fitting.

As seen on figure 12, corrective blades 85 are provided on the pipe stop 82 for adjusting the cross sectional cut of the pipe end. Indeed, during installation, the user may cut the pipe and, once cut, the pipe end may have a cross section which is slightly inclined, not perfectly straight, or may have some marks resulting from the cut. This is especially the case for large diameters when the tube is cut manually. The corrective blades 85 can correct the cross section of the pipe end abutting against the pipe stop, and the end surface of the pipe end. It is also advantageous to make the tube chamfering and a corrective tool of the pipe end to be inserted in the same tool.

Figure 13 and figure 14 show two other examples of tools 180, 280, respectively. The tools of figures 13 and of figure 14 can adapt to different range of pipe diameters. In the examples shown, the tools 180, 280 have a tool body 181, 281 which can be mounted on the pipe end, the tool body 181, 281 extending axially between a pipe insertion end and pipe stops. The tools have a first pipe stop 182a, 282a providing a first stop surface for a first diameter, and a second pipe stop 182b, 282b providing a second stop surface for a second smaller diameter. The tools 180, 280 can therefore adapt to two pipe diameters, as an illustrative example only.

Chamfering blades 183, 283 and corrective blades 185, 285 are provided. On Figure 13, there is only one chamfering blade and one corrective blade (not visible). On the other hand, the tool of Figure 14 has four chamfering blades and four corrective blades, for each diameter. Increasing the number of blades allow to avoid rotate a tool 360° to make a complete chamfering. For example, with four chamfering blades, a rotation of 90° with make complete chamfering. The number of chamfering blades and corrective blades, as well as the number of groove cutters can be adapted according to the needs.

The chamfering blades and/or the corrective blades may be symmetrical to allow rotation in both directions of the tool, depending on user's preferences.

The tool 180 of figure 13 and the tool 280 of figure 14 are further provided with more than one groove cutter 184, 284 on the main body 181, 281 of the tool. It is possible to make and adapt the dimensions of groove for different pipe diameters, using different groove cutters, such as on figure 13 showing two groove cutters.

The blades of the groove cutters can be radially displaced to adjust to the depth of the groove to be made.

It should be noted that, on figure 13 and the tool 280 of figure, the groove for small diameter pipe can be done by a smaller groove maker installed on the tool, because the groove dimension is different. It is also possible to use a same groove dimension for more than one diameters, for the close diameters.

The tool 180 of figure 13 and the tool 280 of figure 14 have handles 187, 287 to facilitate the rotation of the tool. This is helpful for big pipe diameters.

In one embodiment, the position of the grove cutter 84 can be adjusted, to adapt to the mechanical fittings and pipe used.

The clip-ring 30 is designed to push the O-ring 50 to provide sealing. The internal surface features of clip-ring will be stacking in the reshaped groove on the pipe and the conical outer surface of clip-ring will help the pipe to adjusting the pipe holding and redistribute the axial pullout load into axial and radial load on the body.

Thanks to interface between the joint 50 and the pipe, the joint 50 will deform against the main body in one side and against the rigid pipe on another side, thereby insuring the tightening function.

The joint 50 can have an internal triangle shape, to facilitate the pipe insertion.

The joint is a rubber joint preferably made of reinforced polymer.

The nut 40 is preferably made of polymer.

This technology has significant impact to replace solvent cement connection for CPVC, PVC, and PVC-U pipe.

The advantage of the friction mechanical fitting is easy to connect, and the network system become operational quickly.

The foregoing description of the preferred embodiments of the disclosure has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto and their equivalents.

## Claims

1. A mechanical fitting for connecting pipes or for attaching a pipe, comprising:
a main body extending axially from an open end and defining an insertion space for a pipe,
a clip ring designed to close over a pipe,
a nut movably mounted at least in part into the main body for tightening the clip ring,
wherein the clip ring is arranged inside the main body for being contactable by the nut and has an inner circumferential boss or protrusion , to be clipped into a corresponding outer circumferential groove of the pipe.

2. The mechanical fitting of claim 1, wherein the boss has an insertion surface extending from a pipe insertion end to an inner radial boss surface followed by a pull-out surface, wherein the insertion surface forms an insertion angle with respect to the inner radial boss surface wider than a pull-out angle formed by the pull-out surface with respect to the to the inner boss surface.

3. The mechanical fitting of claim 2, wherein at least one of the insertion surface and the pull-out surface is provided with inner grooves.

4. The mechanical fitting of any one of claims 2 to 3, wherein the clip ring has at least one support surface extending axially from at least one of the pull-out surface and the insertion surface, forming at least one shoulders designed to lie against the pipe outer surface of the pipe when the pipe is inserted.

5. The mechanical fitting of any one of the preceding claims, wherein the clip ring is an open ring, wherein an inner diameter of the clip ring when open is larger than an outer diameter of the groove , and with an inner diameter of the clip ring when closed is equivalent to the outer diameter of the groove .

6. The mechanical fitting of claim 5, wherein an inner diameter of the clip ring when open corresponds to an outer diameter of a pipe inserted therein.

7. The mechanical fitting of any one of the preceding claims, wherein the clip ring has an outer conical shape, with an outer conical surface, with the diameter decreasing from the pipe insertion end to the fitting side, and wherein the clip ring is housed in a clip receiving part of the main body, the clip receiving part having a corresponding conical shape.

8. The mechanical fitting of any one of the preceding claims, wherein the nut has a first nut portion and a nut head, with the first nut portion to be mounted inside a nut receiving part of the main body the first nut portion having nut threads to be threaded into internal threads of the nut receiving part, and the nut head extending from the first nut portion , the nut head being provided to abut against the open end of the main body.

9. The mechanical fitting of any of the preceding claim, wherein a joint is provided inside a joint housing portion in the main body located adjacent the clip receiving part .

10. The mechanical fitting of any one of claims 1 to 8, wherein at least one of these features is fulfilled:
a. the nut is made of fiber reinforced polymer, polymer matrix, or composite,
b. the main body is made of fiber reinforced polymer, polymer matrix, or composite,
c. the ring is made of polymer, fiber reinforced polymer, polymer matrix, or composite.

11. Method of assembling a fitting according to any of claims 1 to 10 and a pipe provided with an outer circumferential groove, comprising:
one of inserting the pipe into the fitting main body and the clip ring or inserting both the pipe with the clip ring mounted thereon into the fitting main body,
moving the nut in the main body, by at least one of sliding and threading the nut in the main body to close the clip ring around the pipe,
comprising inserting the boss of the clip ring into the groove of the pipe.

12. Method of assembling a fitting according to any of claims 1 to 10 and a pipe, wherein the groove is provided by a step of cutting the pipe to form the groove.

13. Method of claim 12, comprising the steps of forming simultaneously the outer circumferential groove on the pipe and at least one of chamfering the insertion end of the pipe and correcting the insertion end of the pipe.

14. Method of claim 12 or 13, comprising mounting a tool having a main hollow body over the pipe with a pipe stop to stop the pipe end, the tool having a groove cutter, at an axial distance from the pipe stop,
the method comprising adjusting an axial distance between the pipe stop and the groove cutter to correspond to an axial distance between the pipe stop and the boss of the clip ring of the mechanical fitting.

15. Tool usable in the method of claim 12, wherein the tool has a main hollow body to be mounted over the pipe, with a pipe stop to stop the pipe end, the tool having a groove cutter , at an axial distance from the pipe stop , wherein the axial distance between the pipe stop and the groove cutter can be adjusted to correspond to an axial distance between the pipe stop and the boss of the clip ring of the mechanical fitting.

16. Tool according to claim 15, having at least one of a chamfering blade extending from the pipe stop for chamfering the pipe insertion end, and a corrective blade at the pipe stop for correcting a cross section of the pipe end, and a pair of arms extending outwardly from the main body.
